Europäisches Patentamt

European Patent Office

Office européen des brevets

(19)

(11) Numéro de publication: **0 234 662 B1**

## (12) FASCICULE DE BREVET EUROPEEN

(45) Date de publication de fascicule du brevet:
**18.12.91**

(51) Int. Cl.5: **H04N 5/217, H04N 5/33**

(21) Numéro de dépôt: **87200285.2**

(22) Date de dépôt: **20.02.87**

(54) **Dispositif de filtrage d'un signal vidéo multiplexé.**

(30) Priorité: **25.02.86 FR 8602570**

(43) Date de publication de la demande:
**02.09.87 Bulletin 87/36**

(45) Mention de la délivrance du brevet:
**18.12.91 Bulletin 91/51**

(84) Etats contractants désignés:
**DE FR GB IT SE**

(56) Documents cités:
**EP-A- 0 052 024**

(73) Titulaire: **TELECOMMUNICATIONS RADIOE-LECTRIQUES ET TELEPHONIQUES T.R.T.**
**88, rue Brillat Savarin**
**F-75013 Paris(FR)**

(84) Etats contractants désignés:
**FR**

Titulaire: **N.V. Philips' Gloeilampenfabrieken**
**Groenewoudseweg 1**
**NL-5621 BA Eindhoven(NL)**

(84) Etats contractants désignés:
**DE GB IT SE**

(72) Inventeur: **Marche, Pierre**
**SOCIETE CIVILE S.P.I.D 209 rue de l'Université**
**F-75007 Paris(FR)**

(74) Mandataire: **Chaffraix, Jean et al**
**Société Civile S.P.I.D. 156, Boulevard Haussmann**
**F-75008 Paris(FR)**

EP 0 234 662 B1

EP 0 234 662 B1

## Description

L'invention concerne un dispositif d'élimination des signaux parasites inhérents à un signal vidéo multiplexé en sortie d'un détecteur constitué d'une barrette d'éléments disposés suivant une même ligne et effectuant le balayage de la scène, ledit signal étant d'abord amplifié puis converti en numérique pour effectuer le traitement de l'image et enfin reconverti en analogique.

Ce dispositif trouve une application par exemple lors de l'utilisation de détecteurs infra-rouge de nouvelle génération.

Ces détecteurs sont constitués par des capteurs IR couplés à des dispositifs à transfert de charges ou équivalents. On réalise ainsi en sortie de ces détecteurs, d'une part la fonction de transformation du flux incident en signal électrique et d'autre part la fonction d'intégration des courants et leur multiplexage pour former un signal vidéo série.

Les anciens détecteurs dits de première génération réalisaient uniquement ladite fonction de transformation du flux. L'élimination des signaux parasites issus de ces détecteurs s'opérait simplement par l'adjonction d'un condensateur de filtrage à chaque élément détecteur au niveau du préamplificateur. On effectuait ensuite l'opération de multiplexage des signaux au moyen de circuits appropriés.

Dans les détecteurs de nouvelle génération, on n'a pas accès aux informations élémentaires de chaque détecteur. Les fonctions de transformation du flux et de multiplexage ne sont plus séparées. De ce fait le signal en sortie du détecteur ne se présente plus de la même manière.

Les signaux utiles résultant du balayage de la scène en coordonnées polaires ou rectangulaires apparaissent maintenant en série à la sortie du détecteur et sont modulés dans une certaine plage de fréquences. A ces signaux utiles se superpose un signal continu et basse fréquence parasite qu'il s'agit d'éliminer et qui résulte de la réponse du détecteur à la température moyenne du fond ou à la température de la monture de l'objectif, des offsets électriques entre les différents canaux et du bruit BF de l'ensemble intégration et multiplexage.

Le dispositif de l'invention est destiné à jouer un rôle comparable au condensateur de filtrage placé entre le détecteur et son préamplificateur lorsqu'on utilise un système de détecteurs de première génération, cette liaison capacitive n'existant pas dans les systèmes détecteurs infra-rouge dits de nouvelle génération.

La réalisation d'un tel dispositif destiné à couper les fréquences basses sur chaque canal à partir d'un signal multiplexé provenant de la mise en série de n canaux est à rejeter sous forme analogique car elle nécessiterait de mettre en oeuvre :

- n échantillonneurs-bloqueurs et leur système de pilotage pour effectuer le démultiplexage du signal vidéo série.
- n filtres analogiques (soit n réseaux résistance-condensateur au minimum) pour effectuer le filtrage proprement dit.
- n commutateurs analogiques et leur système de pilotage pour multiplexer ces n voies parallèles avant d'en effectuer la conversion analogique-numérique.

Le démultiplexage, nécessaire pour traiter chaque canal indépendamment, étant aisé en numérique grâce à l'utilisation de mémoires, le dispositif de l'invention est remarquable en ce qu'il comporte en sortie du convertisseur analogique-numérique un premier circuit de mise en forme du signal suivi d'une première mémoire RAM adressée en coordonnées de chaque élément d'image analysé et fonctionnant en registre à décalage, l'information d'entrée correspondant à l'élément d'image en cours d'analyse étant transmise à une borne d'entrée de ladite première mémoire servant également de borne de sortie, ladite information d'entrée étant simultanément transmise à un premier additionneur et à un deuxième additionneur, ledit premier additionneur recevant de plus en provenance de ladite borne de sortie du registre à décalage, l'information changée de signe à travers un inverseur d'un autre élément d'image décalé de n éléments par rapport à l'élément en cours d'analyse pour effectuer la différence desdites informations d'entrée et de sortie et le quotient de cette différence par le nombre d'éléments n de ladite tranche, ledit quotient étant transmis à un troisième additionneur qui reçoit d'une deuxième mémoire RAM la valeur moyenne des informations d'entrée de la tranche d'éléments associée à l'élément d'image précédant l'élément en cours d'analyse pour former la valeur moyenne des informations d'entrée de la tranche d'éléments associée à l'élément en cours d'analyse, la valeur moyenne des informations d'entrée de la tranche d'éléments associée au premier élément analysé ayant été calculée et mémorisée dans ladite deuxième mémoire lors d'une phase d'initialisation, ladite valeur moyenne issue du troisième additionneur étant, après passage dans un deuxième circuit de mise en forme du signal, d'une part mémorisée dans ladite deuxième mémoire RAM pour servir au calcul de la valeur moyenne associée aux éléments d'image de la tranche suivante, et d'autre part transmise à une troisième mémoire RAM qui introduit un certain retard fixant la position de

2

EP 0 234 662 B1

chaque tranche de n éléments par rapport à l'élément d'image en cours d'analyse, la sortie de ladite troisième mémoire étant reliée après inversion de signe du signal à une autre entrée dudit deuxième additionneur qui effectue ainsi la différence entre la valeur de l'information d'entrée correspondant à l'élément en cours d'analyse et la valeur moyenne des informations de la tranche de n éléments qui lui est associée, issue de ladite troisième mémoire, cette dernière différence correspondant au traitement de l'opération de filtrage étant transmise à travers un troisième circuit de mise en forme du signal.

La description suivante en regard des dessins annexés, le tout donné à titre d'exemple fera bien comprendre comment l'invention peut être réalisée.

La figure 1 montre le schéma d'un détecteur de nouvelle génération.

La figure 2 représente une trame obtenue pour un balayage de la scène effectué en coordonnées polaires.

La figure 3 représente le schéma synoptique du filtre conforme à l'invention.

La figure 4 montre une tranche d'éléments en forme de couronne pour un balayage effectué en coordonnées polaires.

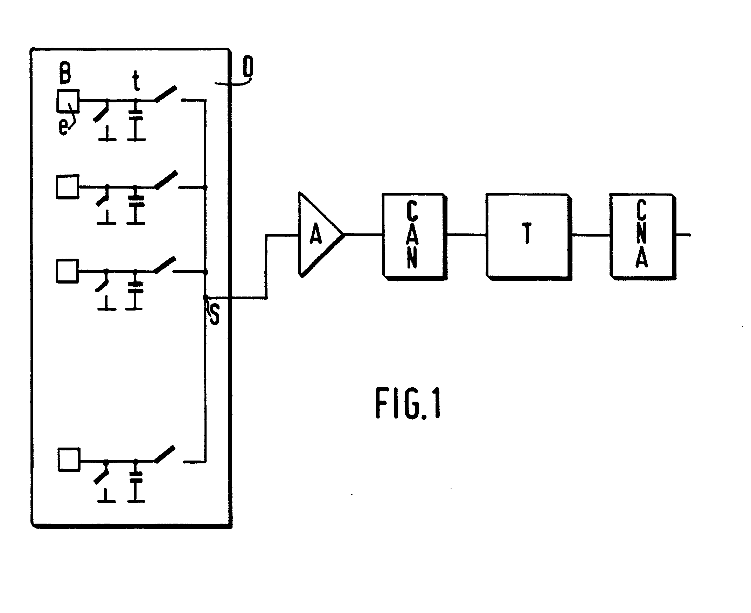

La figure 1 représente le schéma d'un ensemble détecteur de nouvelle génération comportant une barrette B d'éléments détecteurs e disposés suivant une même colonne. Chacun d'eux est couplé à un dispositif à transfert de charge t ou équivalent dont les sorties sont interconnectées en S pour transmettre un signal vidéo série. L'ensemble est contenu dans un vase "Dewar" D. Le signal analogique qui apparaît sur la sortie S est amplifié (A) et converti en numérique (CAN). Le signal numérique subit un traitement (T) puis peut subir une reconversion en analogique (CNA).

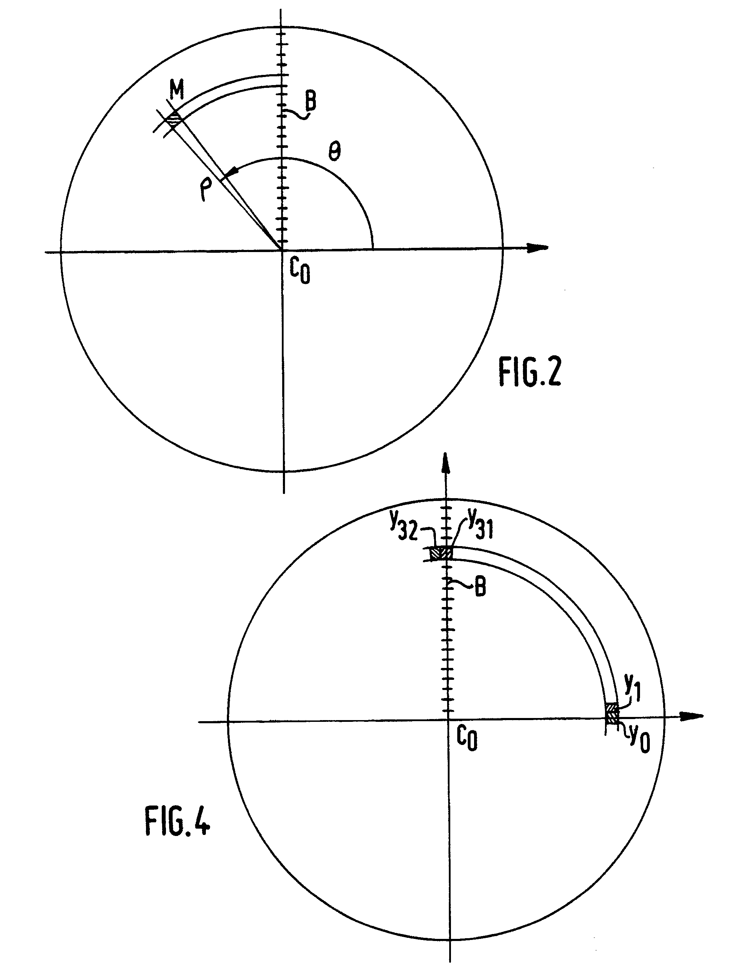

On suppose par exemple que le balayage de la scène est effectué en coordonnées polaires. Une analyse complète de la scène délimite le champ selon les caractéristiques d'un auto-directeur infra-rouge. L'image obtenue dans le plan focal de l'objectif constitue une trame représentée sur la figure 2. Les détecteurs e sont disposés en une barrette B de n éléments. Un prisme tournant au niveau de l'objectif produit la rotation de l'image dans le plan de la scène. Chaque élément détecteur e analyse donc une couronne circulaire centrée en Co. Le flux qu'il reçoit est intégré et lu séquentiellement pendant un certain temps selon la vitesse de rotation tous les 1/128 tour. La trame ainsi décomposée en 128 positions successives de la barrette de détecteurs elle-même découpée géographiquement en n éléments est formée de 128 fois n éléments d'image ou pixels (contraction des mots anglais picture elements). L'un de ces éléments e est représenté autour du point M de coordonnées polaires $\rho$ et $\theta$. Si la vitesse du balayage est de 200 t/s, la période de la trame est de 5 ms. Si par ailleurs n = 32 éléments, le temps qui s'écoule entre l'analyse de deux pixels consécutifs est de l'ordre de la microseconde.

Le filtre de l'invention est situé en sortie du CAN. Sa fonction de transfert a pour expression :

$$H(z) = 1 - \frac{1}{n} \sum_{k=k_0}^{n+k_0-1} z^{-k}$$

$$= 1 - \frac{1}{n} [z^{-k_0} + z^{-(k_0+1)} + \dots + z^{-(n+k_0-1)}]$$

avec n = 2, 4, 8, 16, 32 ou 64 positions successives de la barrette de détecteurs,
$K_0$ = 0, 1, ou 2
dans laquelle z représente un opérateur retard.

Soit y(t) le niveau de luminance du pixel analysé à un instant t.

L'opérateur z faisant correspondre à $z^n$ la valeur $y(t+n\tau)$, la transformation H appliquée à y(t) engendre une fonction u(t) telle que :

$$y(t) \overset{H}{\to} u(t) = y(t) - \frac{1}{n}.\{y(y-k_0\tau) + y[t-(k_0+1)\tau] + \dots$$

$$+ y[t-(n+k_0-1)\tau]\}$$

Dans cette expression, y(t) est l'information brute du niveau de luminance d'un pixel analysé à l'instant t et qui inclut celle des signaux parasites énumérés ci-dessus. $y(t-k_0\tau)$, $y[t-(k_0+1)\tau]$,..., $y[t-(k_0+n-1)\tau]$ représentent les niveaux de luminance de n pixels analysés respectivement aux instants $t - k_0\tau$, $t - (k_0+1)\tau$,..., $t - (n+k_0-1)\tau$ et qui incluent également les niveaux des signaux parasites, $\tau$ étant l'intervalle de temps

3

EP 0 234 662 B1

entre les passages de deux informations consécutives. Le quotient par n de leur somme représente la valeur moyenne du niveau de luminance des n pixels et la soustraction de cette valeur moyenne à la valeur de luminance du pixel analysé à l'instant t conduit à l'élimination des signaux parasites. Le nombre $k_0$ fixe la position de la tranche des n pixels analysés antérieurement par rapport au pixel en cours d'analyse à l'instant t.

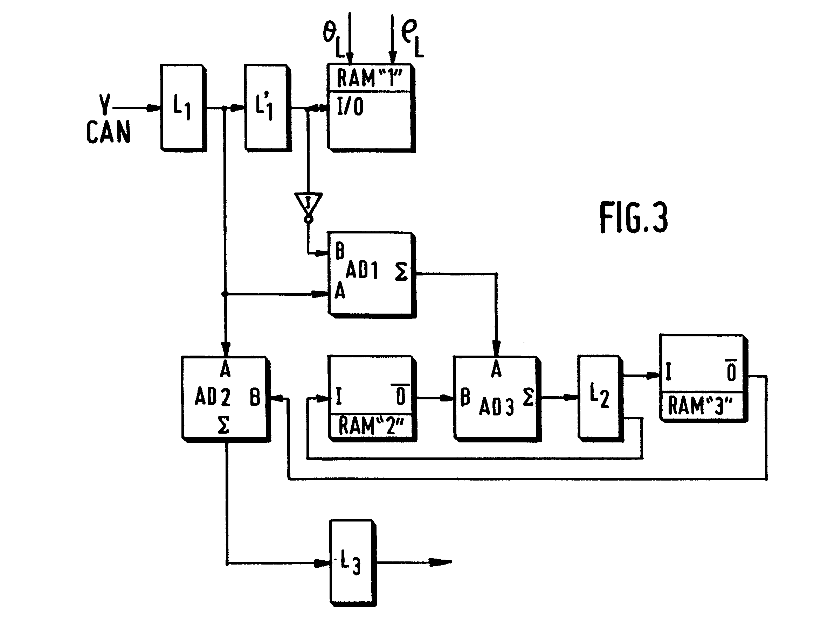

Le schéma synoptique du filtre conforme à l'invention est représenté sur la figure 3.

Les coordonnées $\theta$ et $\rho$ liées au balayage en coordonnées polaires ($\theta$ étant la position angulaire de la barrette et $\rho$ le numéro du détecteur), deviennent $\theta_L$ et $\rho_L$ après remise en forme des signaux.

Y (sortie CAN) représente un message vidéo série qui en sortie du convertisseur analogique-numérique est constitué par une suite de mots de 9 bits qui sont les signaux numérisés des niveaux de luminance.

Après passage à travers le bloc $L_1$ qui opère une remise en forme des signaux pour les faire durer le maximum de temps et à travers le bloc $L'_1$ de protection contre les courts-circuits, les informations successives Y sont transmises au bloc mémoire RAM "1" adressé en $\theta_L$ et $\rho_L$ et utilisé comme ligne à retard. Cette mémoire est constituée de registres à décalage empilés horizontalement, chaque pile correspondant à un numéro de la barrette de détecteurs ($\rho$) et chaque case d'un registre correspondant verticalement à une position de $\theta$ mais qui se déplace pour opérer le transfert de l'information introduite sur les entrées/sorties I/O. Ce sont en effet les mêmes broches qui servent à entrer les données d'entrée et à sortir les données de sortie. Aux adresses $\rho_L$ et $\theta_L$ qui sont les coordonnées des pixels analysés, on vient ranger les valeurs y des niveaux de luminance. Par le mécanisme de transfert des registres à décalage, une entrée y(t) à l'instant t s'effectue immédiatement après une sortie y(t-n$\tau$). Ainsi pour chaque pixel analysé à un instant t, une tranche d'informations successives correspondant au même numéro du détecteur ($\rho_L$) est conservée en mémoire pendant l'intervalle de temps n$\tau$.

Dans le laps de temps de l'ordre de 1 $\mu$s séparant l'analyse de deux pixels consécutifs, il n'est pas possible d'aller chercher n valeurs en mémoire, d'en effectuer la moyenne et de soustraire cette moyenne de la valeur d'analyse en cours. Un calcul de valeur moyenne est fait une fois pour toutes dans une étape d'initialisation sur la tranche de pixels délimitée par les valeurs de n et de $k_0$.

On choisit par exemple n = 32 et $k_0$ = 0. Pour une valeur constante de $\rho$ (numéro du détecteur) la figure 4 montre la tranche de couronne ainsi délimitée.

Entre les positions 0 et 31 de la barrette, la valeur moyenne du niveau de luminance d'un détecteur a pour expression :

$$\overline{y}_{31} = \tfrac{1}{32} (y_0 + y_1 + ... + y_{31})$$

Cette valeur moyenne calculée dans la phase d'initialisation est mise en mémoire dans la RAM "2".

Pour le pixel correspondant à la position suivante de la barrette ($\theta$ = 32), la valeur moyenne du niveau de luminance sur les 32 positions précédentes s'écrit :

$$\overline{y}_{32} = \tfrac{1}{32} (y_1 + y_2 + ... + y_{32})$$

En effectuant la différence de ces deux valeurs moyennes, on obtient :

$$\overline{y}_{32} - \overline{y}_{31} = \tfrac{1}{32} (y_{32} - y_0)$$

On voit d'après cette relation que le calcul de la valeur moyenne $\overline{y}_{32}$ est relativement simple puisqu'il n'y a plus qu'une seule valeur $\overline{y}_{31}$ à aller chercher en mémoire au lieu de 32. La valeur moyenne $\overline{y}_{32}$ est ensuite mise en mémoire dans la RAM "2" afin de pouvoir calculer de la même façon $\overline{y}_{33}$ au moyen de la relation déduite par récurrence de la précédente :

$$\overline{y}_{33} - \overline{y}_{32} = \tfrac{1}{32} (y_{33} - y_1)$$

Par le mécanisme des registres à décalage de RAM "1", $y_0$ sort de cette mémoire pour y laisser entrer $y_{32}$; de même l'analyse du pixel suivant fait sortir $y_1$ pour laisser entrer $y_{33}$ et ainsi de suite.

En revenant au schéma synoptique du filtre, on voit que $y_0$ est aiguillé à travers l'inverseur I vers l'entrée B de l'additionneur (AD1) dont l'entrée A reçoit $y_{32}$. On a donc sur la sortie de cet additionneur la valeur $y_{32} - y_0$. La division de cette valeur par 32 qui consiste simplement à éliminer les cinq bits de poids le plus faible est introduite sur les entrées A de l'additionneur (AD2) qui reçoit sur ses entrées B la valeur moyenne $\overline{y}_{31}$ précédemment mise en mémoire dans RAM "2" et fournit donc sur ses sorties $\Sigma$,

$\overline{y}_{31} + \tfrac{1}{32} (y_{32} - y_0)$ qui n'est autre que la valeur moyenne $\overline{y}_{32}$. Après remise en forme dans le bloc $L_2$, $\overline{y}_{32}$

4

est mise en mémoire d'une part dans RAM "2" pour servir au calcul de $\bar{y}_{33}$ et d'autre part dans RAM "3:" qui fonctionne en ligne à retard (avec un retard nul pour $k_0 = 0$) et d'où elle ressort inversée pour être transmise aux entrées B d'un autre additionneur (bloc AD2) qui reçoit $\bar{y}_{32}$ sur ses entrées A. Ainsi les sorties $\Sigma$ de cet additionneur fournissent $y_{32} - \bar{y}_{32}$ c'est-à-dire le traitement de l'opération de filtrage des signaux parasites objet de l'invention dont la remise en forme est effectuée à travers le bloc L₃.

Dans l'exemple ci-dessus, on a traité le cas le plus simple pour lequel $k_0 = 0$, c'est-à-dire que l'on a associé à l'information $y_{32}$ arrivant à l'instant t, la valeur moyenne $\bar{y}_{32}$ calculée sur la tranche de 32 pixels incluant le pixel en cours d'analyse à cet instant.

Si l'on fixe $k_0 = 1$ ou 2, la tranche de 32 pixels sur laquelle la valeur moyenne est calculée se trouve décalée de 1 ou 2 pixels par rapport à l'information $y_{32}$. La mémoire RAM "3" remplit alors pleinement son rôle de ligne à retard en même temps qu'elle effectue l'inversion de la valeur moyenne.

La filtre coupe-bas ainsi réalisé, de pente - 6 dB/octave a une fréquence de coupure basse à - 3 dB égale à fcb donnée dans le tableau suivant, selon n et $k_0$ (fcb en Hz), dans le cadre de l'exemple considéré :

| $k_0 \downarrow$ | $n \rightarrow$ | 2 | 4 | 8 | 16 | 32 | 64 |
|---|---|---|---|---|---|---|---|
| 0 | fcb→ | 6500 | 2100 | 900 | 410 | 200 | 100 |
| 2 | fcb→ | | | 550 | 320 | 170 | |

L'analyse de la scène peut également être effectuée en coordonnées rectangulaires. Le traitement du problème est identique.

Pour plus de généralités on désigne par k et i les coordonnées du pixel analysé ($k = \rho$ et $i = \theta$ dans le case de l'analyse en coordonnées polaires considéré ci-dessus). Soient Y le niveau de luminance en sortie du convertisseur analogique-numérique et $t_{k,i}$ l'instant auquel le point de coordonnées k,i est analysé. Ces coordonnées devenues $k_L$ et $i_L$ après régénération des signaux sont les adresses de la mémoire RAM "1" (schéma de la figure 3) qui joue le rôle de ligne à retard. La capacité de cette mémoire est de 2048 mots de 16 bits, capacité utilisée totalement si $n = 64$ ou partiellement pour $n = 2, 4, 8, 16$ ou 32. Durant la première partie du cycle correspondant au pixel de coordonnées k,i, le niveau de luminance du point k,i-n est lu et durant la deuxième partie celui du point k,i est écrit en RAM "1".

Les additionneurs du bloc 5 et les inverseurs du bloc AD1 permettent de calculer $Y_{k,i} - Y_{k,i-n} = \Delta_{k,i}$.

La RAM "2" rebouclée sur elle-même grâce aux additionneurs du bloc AD3 et aux circuits de remise en forme du bloc L₂ contient à l'adresse k,i (modulo n) l'information

$$\Sigma_{k, i-1} = \sum_{j=1}^{n} Y_{k, i-j}$$

qui est extraite pour lui additionner $\Delta_{k,i}$ dans la deuxième partie du cycle pixel k,i. Ainsi à la fin du cycle pixel k,i, l'information de sortie du bloc 7 correspond à $\Sigma_{k,i-1} + \Delta_{k,i} = \Sigma_{k,i}$.

Cette information divisée par n est introduite en RAM "3" qui joue le rôle de ligne à retard pour la génération de $k_0$. Dans tous les cas, cette information est égale à la valeur moyenne $\bar{Y}_k$ de n niveaux de luminances consécutives sur le même détecteur k.

L'opération $n_{k,i} = Y_{k,i} - \bar{Y}_k$ est effectuée grâce aux additionneurs du bloc AD2. Le résultat du calcul (luminance différentielle du point k,i) est remise en forme grâce aux circuits du bloc L₃.

L'initialisation du dispositif pourra se faire automatiquement à la mise sous tension ou à chaque début de cycle d'acquisition par exemple.

En plus des fonctions à assurer pour lesquelles il est prévu, ce filtre :

a - a l'avantage d'effectuer un filtrage BF du signal multiplexé et donc de participer à l'élimination du bruit BF du dispositif à transfert de charge (CCD).

b - doit pouvoir permettre de s'affranchir des corrections de non-uniformités des détecteurs et du CCD qui se traduisent par des offsets (qu'il s'agisse des offsets systématiques dûs à la réponse des détecteurs excités par un flux photonique à travers des angles solides différents ou d'offsets "électriques" des différents canaux du CCD).

Ainsi seules les corrections de non-uniformités de la responsivité du capteur IR couplé à des CCD devraient être à effectuer.

c - provoque une augmentation de bruit que l'on peut estimer à $(1 + 1/n)^{1/2}$ (soit + 0,13 dB pour n = 32) ce qui est parfaitement négligeable.

## Revendications

1. Dispositif d'élimination des signaux parasites inhérents à un signal vidéo multiplexé en sortie d'un détecteur constitué d'une barrette d'éléments disposés suivant la même colonne et effectuant le balayage de la scène, ledit signal étant d'abord amplifié puis converti en numérique pour faire son traitement d'image et enfin reconverti en analogique, caractérisé en ce que ledit dispositif comporte en sortie du convertisseur analogique-numérique un premier circuit de mise en forme du signal suivi d'une première mémoire RAM adressée en coordonnées de chaque élément d'image analysé et fonctionnant en registre à décalage, l'information d'entrée correspondant à l'élément d'image en cours d'analyse étant transmise à une borne d'entrée de ladite première mémoire servant également de borne de sortie, ladite information d'entrée étant simultanément transmise à un premier additionneur et à un deuxième additionneur, ledit premier additionneur recevant de plus, en provenance de ladite borne de sortie du registre à décalage, l'information changée de signe à travers un inverseur d'un autre élément d'image décalé de n éléments par rapport à l'élément en cours d'analyse pour effectuer la différence desdites informations d'entrée et de sortie et le quotient de cette différence par le nombre d'éléments n de ladite tranche, ledit quotient étant transmis à un troisième additionneur qui reçoit d'une deuxième mémoire RAM la valeur moyenne des informations d'entrée de la tranche d'éléments associée à l'élément d'image analysé précédant l'élément en cours d'analyse pour former la valeur moyenne des informations d'entrée de la tranche d'éléments associée à l'élément en cours d'analyse, la valeur moyenne des informations d'entrée de la tranche d'éléments associée au premier élément analysé ayant été calculée et mémorisée dans ladite deuxième mémoire, lors d'une phase d'initialisation, ladite valeur moyenne issue du troisième additionneur étant, après passage dans un deuxième circuit de mise en forme du signal, d'une part mémorisée dans ladite deuxième mémoire RAM pour servir au calcul de la valeur moyenne associée aux éléments d'image de la tranche suivante et d'autre part, transmis à une troisième mémoire RAM qui introduit un certain retard fixant la position de chaque tranche de n éléments par rapport à l'élément d'image en cours d'analyse, la sortie de ladite troisième mémoire étant reliée après inversion de signe du signal à une autre entrée dudit deuxième additionneur qui effectue ainsi la différence entre la valeur de l'information d'entrée correspondant à l'élément en cours d'analyse et la valeur moyenne des informations de la tranche de n éléments qui lui est associée, issue de ladite troisième mémoire, cette dernière différence correspondant au traitement de l'opération de filtrage étant transmise à travers un troisième circuit de mise en forme du signal.

## Claims

1. An arrangement for cancelling spurious signals inherent in a multiplexed video signal at an output of a detector formed by an array of elements arranged along the same column and effecting scanning of the scene, said signal first being amplified and thereafter converted into the digital form for processing the picture and finally being reconverted into the analog form, characterized in that at the output of the analog-to-digital converter the arrangement is provided with a first signal-shaping circuit followed by a first RAM memory which is addressed in coordinates of each analysed picture element and functions as a shift register, the input data corresponding to the picture element being analysed being conveyed to an input terminal of this first memory which at the same time serves as the output terminal, said input data being simultaneously conveyed to first and second adders, the first adder additionally receiving from said shift output terminal the change-of-sign information via an inverter of a different picture element shifted through n elements with respect to the element being analysed for producing the difference between said input and output data and the quotient of this difference by dividing by the n elements of said group, said quotient conveyed to a third adder receiving from a second RAM memory the average value of the input data of the group of elements associated with the picture element preceding the element being analysed for forming the average value of the input data of the group of elements associated with the element being analysed, the average value of the input data of the group of elements associated with the first analysed element being calculated and stored in said

EP 0 234 662 B1

second memory during an initialisation phase, the average value supplied by the third adder being stored, after having been passed through a second signal-shaping circuit, in the second RAM memory for use in the calculation of the average value associated with the picture elements of the following group and also being conveyed to a third RAM memory which introduces a certain delay fixing the position of each n-element group relative to the picture element being analysed, the output of the third memory being connected after the sign of the signal has been inverted, to a further input of the second adder which thus produces the difference between the value of the input data corresponding to the element being analysed and the average value of the information components of the group of n elements associated therewith, supplied by the third memory, this last-mentioned difference, which corresponds to the filtering operation, being conveyed via a third signal-shaping circuit.

**Patentansprüche**

1. Schaltungsanordnung zum Eliminieren einem Multiplex-Video-Signal inhärenter Streusignale an dem Ausgang eines durch eine Reihe längs derselben Spalte gegliederter Elemente gebildeten und die Szene abtastenden Detektors, wobei dieses Video-Signal zunächst verstärkt und danach in die digitale Form umgewandelt wird zum Verarbeiten des Bildes und zum Schluß in die analoge Form zurückverwandelt wird, dadurch gekennzeichnet, daß am Ausgang des Analog-Digital-Wandlers die Schaltungsanordnung mit einem ersten Signalformer versehen ist, dem ein erster RAM-Speicher folgt, der in Koordinaten jedes analysierten Bildelementes adressiert und als Schieberegister wirksam ist, wobei die Eingangsdaten demjenigen analysierten Bildelement entsprechen, das einer Eingangsklemme dieses ersten Speichers zugeführt wird, wobei diese Klemme gleichzeitig als Ausgangsklemme wirksam ist, wobei die genannten Eingangsdaten gleichzeitig einem ersten und einem zweiten Addierer zugeführt werden, wobei der erste Addierer über einen Inverter außerdem von der genannten Ausgangsklemme des Schieberegisters die Vorzeichenänderungsinformation eines anderen, um n Elemente gegenüber dem analysierten Element verschobenen Bildelementes erhält zum Bilden der Differenz zwischen den genannten Eingangs- und Ausgangsdaten, sowie zum Bilden des Quotienten aus der Teilung dieser Differenz durch die n Elemente der genannten Gruppe, wobei dieser Quotient einem dritten Addierer zugeführt wird, der von einem zweiten RAM-Speicher den mittleren Wert der Eingangsdaten der Elementegruppe erhält, die demjenigen analysierten Bildelement zugeordnet ist, das dem in der Analyse begriffenen Element vorhergeht, zum Bilden des mittleren Wertes der Eingangsdaten derjenigen Elementegruppe, die dem in der Analyse begriffenen Element zugeordnet ist, wobei der mittlere Wert der Eingangsdaten der dem ersten analysierten Element zugeordneten Elementegruppe berechnet und während einer Initialisierungsphase in dem genannten zweiten Speicher gespeichert wird, wobei der durch den dritten Addierer erhaltene mittlere Wert nach dem Durchgang durch einen zweiten Signalformer einerseits in dem zweiten RAM-Speicher gespeichert wird, und zwar zum Gebrauch bei der Berechnung des den Bildelementen der nachfolgenden Gruppe zugeordneten mittleren Wertes, und andererseits einem dritten RAM-Speicher zugeführt wird, der eine bestimmte Verzögerung einführt, welche die Lage jeder Gruppe mit n Elementen gegenüber dem in der Analyse begriffenen Bildelement festlegt, wobei der Ausgang des genannten dritten Speichers nach Umkehrung des Vorzeichens des Signals mit einem anderen Eingang des genannten zweiten Addierers verbunden wird, der auf diese Weise die Differenz zwischen dem Wert der dem in der Analyse begriffenen Element entsprechenden, von dem dritten Speicher gelieferten Eingangsdaten und dem mittleren Wert der Daten der derselben zugeordneten Gruppe mit n Elementen liefert, wobei diese Differenz, die dem Filtervorgang entspricht, über einen dritten Signalformer übertragen wird.

7

FIG.1

FIG.2

FIG.4

FIG.3